# EUROPEAN PATENT SPECIFICATION

(11) **EP 3 704 459 B1**
(45) Date of publication and mention of the grant of the patent: **29.09.2021**
(21) Application number: 18904499.3
(22) Date of filing: 01.11.2018
(51) Int. Cl.: G01M 3/24, G01M 3/32, G01M 17/007

(54) **AN AIR LEAKAGE AND WIND-INDUCED NOISE MEASUREMENT SYSTEM FOR VEHICLES**
LUFTLECK- UND WINDINDUZIERTES LÄRMMESSSYSTEM FÜR FAHRZEUGE
SYSTÈME DE MESURE DU BRUIT INDUIT PAR UNE FUITE D'AIR OU LE VENT, POUR VÉHICULES

(30) Priority: 03.11.2017 TR 201717229
(43) Date of publication of application: 09.09.2020
(73) Proprietor: Ford Otomotiv Sanayi Anonim Sirketi, Istanbul (TR)
(72) Inventor: AVSAR, Ibrahim, 34885 Sancaktepe / Istanbul (TR); BAKTIR, Turgut Gencay, 34885 Sancaktepe / Istanbul (TR); OZTURK, Cihan, 34885 Sancaktepe / Istanbul (TR); KOMAN, Hakki Can, 34885 Sancaktepe / Istanbul (TR); OZDEN, Ozdemir, 34885 Sancaktepe / Istanbul (TR)
(74) Representative: Dericioglu, E. Korhan
(86) International application number: PCT/TR2018/050650
(87) International publication number: WO 2019/168485

(56) References cited:
- EP-A1- 0 590 654
- DE-A1- 2 854 238
- JP-A- H0 442 031
- US-B2- 8 502 700

## Description

### Technical Field

This invention is related to an air leakage and wind-induced noise measurement system that provides the measurement of air leakage in the motor vehicles and at the same time the measurement of the wind-induced noise by determining door displacements that has a great share in the wind-induced noise.

### Prior Art

The air leakage amount and wind-induced noise amount in the motor vehicles are the most important parameters that affect the user's quality perception. A lot of noise enters the vehicle based on the road during driving, motor of the vehicle or the exterior environment, at the same time due to the air leakages experienced within the vehicle cabin, noises such as boom and whistle also occurs within the vehicle. Particularly, when the vehicles increase their speeds the severity of the noise such as boom etc. within the vehicle due to the air leakage also increases and it disturbs the users. Said noise and sounds not only disturbs the user but also affects the user's quality perception of the vehicle. Users require hearing wind-induced noise in a minimum ratio within the vehicle cabin of the vehicle during they drive. Automotive manufacturers develop many different applications in order to decrease said noises to a minimum level. The vehicle produced according to the present patent subject to application could be simulated as if it is driven at a preferred speed level and provides the measurement of the air leakage and the wind-induced noise. Together with the present patent subject to application not only air leakages can be measured but also the door replacements can be determined that is the most important reason in terms of the wind-induced noise.

In today's applications, the air leakage points on the vehicle can be tested manually. The most important leakage points that causes air leakage are determined by the operator's paying attention and feeling during the test. The air leakages are determined by operator's hearing and feeling the leakage. Since the air leakages are determined by the operator within the vehicle in air leakage tests, the air leakage devices have to be operated at low air pressures. When the air leakage tests are performed at low pressures, in general only major air leakages are determined in the tests, unfortunately the small air leakages are not determined. The undetermined small air leakages cause wind-induced noise or whistle sound during driving.

Another technical problem encountered within the state of art is that the air volume reached by the air leakage devices used for the test is in minimum amounts. In this case, the volume of the air leak through the vehicle is not provided then the air leakage points cannot be determined. Also, in case there is excess air leakage within the vehicle, required pressure values cannot be obtained. In addition to said problems, another problem is that the vehicle cannot be simulated fully during driving, when the pressure difference between the interior and exterior environment of the vehicle. Since the pressure difference between the interior and the exterior environment of the vehicle is not provided, the displacement of the door is not performed and the displacement ratio of the doors cannot be measured. During the measurement of the door replacements of the vehicles, vehicles are sent to the wind tunnels. The door replacement measurements performed in the wind tunnels causes high test costs, also process to find the appropriate test time for the wind tunnels takes much time.

There are some current applications that are developed for performing the air leakage tests of the vehicles. In the state of the art, in European Patent Document No EP0016656 A1, a vehicle leak-tightness test device is described. In said document, pressure and heat difference is created between the interior and exterior environment of the vehicle by sending cold air into the vehicle by means of the device that creates pressure and heat difference. The infrared cameras located onto the vehicle scan the outer surface of the vehicle, determine the temperature differences and inform the operator by sending to a control interface. In the present patent subject to application, the high speed drive of the car is simulated by means of giving high-volume and pressurized air into the cabin and during the test the door displacement amount is measured by means of the laser distance meter and the level of the wind-induced noise is measured by means of the acoustic camera.

In the state of art, in Chinese Patent Document No CN103575475 A, a vehicle tightness test system is described. In said document, the air heated or cooled by means of a regulator is sent into the vehicle after it is pressurized by means of the blower. Created pressure and temperature difference is scanned by thermal cameras and different regions are obtained. Therefore, the points on which there is a tightness problem are determined. The present patent subject to application can make test simulation at the preferred speed of the vehicle. During the test not only door displacement amount is measured but also wind-induced noise level is determined.

In the state of the art, in German Patent Document No DE102014002769 A1, a temperature difference determination system is described that provides to perform and evaluate the vehicle tightness test. In this document, thermal cameras that are connected to a robot scan the specific regions of the vehicle and determine the air changes created by the exterior environment and transfer to the evaluation system. In the present invention subject to application, by pressurizing the interior environment of the cabin at a required level, door displacement amount and wind-induced noise level can be measured at the same time.

In the state of the art, in Patent Document No CA1322471 C, a device is described that measures the pressure difference, provides to calculate the air volume and air leakage amount on the basis of the pressure difference. In said patent document, there is no improvement in terms of the door displacement and the pressure difference on the door is not simulated. In the present patent subject to application, the high speed drive of the vehicle is simulated by giving high volume and pressurized air into the cabin and during the test the door displacement amount is measured by means of the laser distance meter and the level of the wind-induced noise is measured by means of the acoustic camera.

Other devices are known from the documents US8502700, EP0590654, DE2854238 and JP H04 42031.

The patents of the state of the art do not provide opportunities such as the adjustment of the test and air volume within the required pressure values; it is not possible to perform the air leakage measurement and to evaluate the door displacements within the same test.

The preferred pressure simulation values can be provided, test values can be measured without using operator by means of the sensors, the door displacement can be performed during the test and the displacement amount can be measured together with the present invention subject to application.

### Aims of the Invention

The aim of this invention is to provide an air leakage and wind-induced noise measurement system that provides the measurement of the door displacement amount by simulating the affect applied on the vehicle in the wind turbines wherein the vehicle noise-induced noise is measured.

Another aim of this invention is to provide an air leakage and wind-induced noise measurement system that provides to perform air leakage tests for vehicles, to measure air leakage amount and to determine the air leakage points.

Another aim of this invention is to provide an air leakage and wind-induced noise measurement system that can be used in test rooms, is modular and easy to use.

Another aim of this invention is to provide an air leakage and wind-induced noise measurement system that can obtain the pressure differences on the door.

### Brief Description of the Invention

The air leakage and wind-induced noise measurement system described in the first claim and the other relevant claims realized to achieve the aim of this invention comprises; pressurized and high volume air supplier, pipe that transfers the air into the vehicle, laser distance meter, acoustic camera, pressure sensors and control unit. The measurement system of this invention is used in the air leakage tests of the vehicles. The air leakage measurement of the vehicles can be tested with a high pressure and high volume by means of this measurement system. The dynamic pressure created on the door during the high speed drive of the vehicle can be simulated from the interior environment of the vehicle by means of the high speed provided by the measurement system. When said simulation is provided, the door displacement amount can be observed and measured. At the same time minor air leakages arises from high speeds can be determined by making air leakage control during the test, the possible effects, speed and power of the air leakages and the effects of the wind-induced noise can be determined.

### Detailed Description of the Invention

An air leakage and wind-induced noise measurement system provided by the present invention in order to fulfill the aim of the invention is shown in the attached drawings, wherein in these drawings;

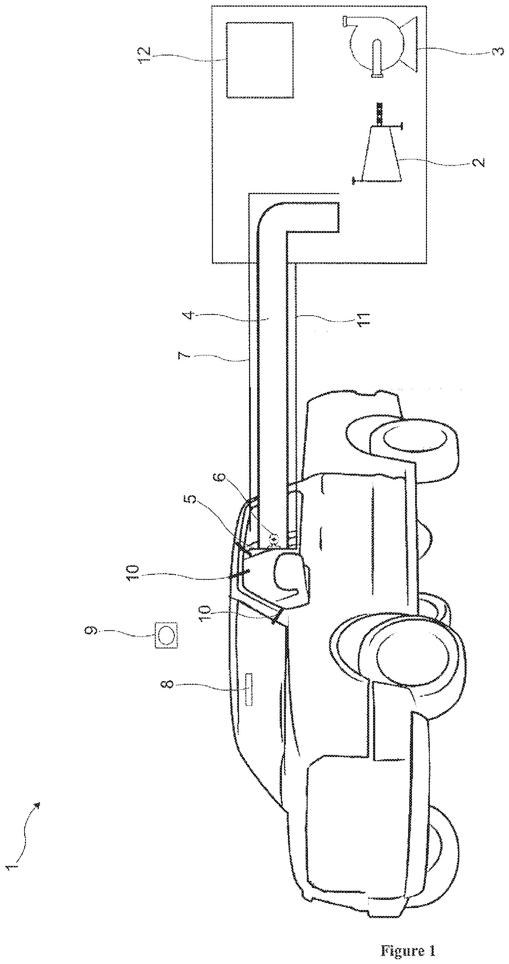

Figure 1 is a schematic view of the air leakage and wind-induced noise measurement system.

All parts within the drawings are enumerated one by one, and the numbers correspond to the following.
**1.** Measurement system
**2.** Compressor
**3.** Pump
**4.** Air transmission line
**5.** Link adaptor
**6.** Pressure sensor
**7.** Sensor line
**8.** Distance meter
**9.** Measurement point
**10.** Camera
**11.** Data line
**12.** Control unit

The air leakage and wind-induced noise measurement system (1) that provides to perform the air leakage tests of the motor vehicles, at the same time to measure the door displacement amount that causes wind-induced noise and the wind-induced noise, comprises the following elements:
- at least one compressor (2) that provides the required air for the air leakage test,
- at least one pump (3) that pumps the air provided by the compressor into the vehicle for test, that sucks the air in the vehicle in the suction direction by operating backwardly,
- at least one air transmission line (4) that passes through the air flow between the vehicle and the pump (3), provides the air directed by the pump to be transferred to the vehicle, preferably has a tubular form and is portable ,
- at least one link adaptor (5) that is located on one end of the air transmission line or attached to its one end, provides the connection of the air transmission line (4) to the vehicle imperviously,
- at least one pressure sensor (6) that is located within the vehicle and/or within the air transmission line, that measures the pressure value within the vehicle and outside the vehicle,
- a distance meter (8) that measures the door displacement amount of the door that is opened outwardly by means of the air pressure applied into the interior volume of the vehicle and/or an acoustic camera (9) that measures the noise (sound wave) frequency occurred during the door replacement,
- a control unit (12) that provides to create the preferred test pressure value within the vehicle by controlling the compressor (2) and the pump (3) according to the measurement value that is received from the pressure sensor (6), that controls the door opening amount that is opened outwardly according to the measurement value that is received from the distance meter (8) and/or the camera (9), that controls the test process by determining the air leakage formation pressure, the speed value of the vehicle simulated according to the pressure, by saving the instant pressure value in case the door opening amount is above the preferred set value, and the door opening amount.

The air leakage measurement tests and at the same time the wind-induced noise determination by measuring the door opening amount are provided by means of the measurement system (1) of the present invention. In virtue of the measurement system (1), the procedures made with two different tests and the test units that are independent of each other can be made integrally and cost-efficiently.

A pressurized and high volume air is used in air leakage test and wind-induced noise measurement and the air used is provided by the compressor (2). The compressor (2) can have a different capacity and size. The compressor (2), by pressurizing the atmospheric air that it receives from the exterior environment, provides the highpressure and high-volume air used for the test. The pressurized air provided by the compressor (2) is pumped into the test device by the pump (3).

There is an air transmission line (4) at the compressor (2) outlet. A pump (3) is connected to the air transmission line (4) and pressurized test air is connected to the air transmission line (4) by the pump (3). One end of the air transmission line (4) is connected to test device. Therefore an aerial line is provided between the compressor (2) and the test device by means of the air transmission line (4). The pressurized air provided by the compressor (2) is continuously pumped into the test vehicle through the air transmission line. In one embodiment of the invention, the air transmission line (4) is in the form of a pipe or hose or blower.

The air transmission line (4) can be connected to the test vehicle through the glass or the door. It is very important to connect the air transmission line (4) in a manner wherein there will be no air leakage (escape). Therefor a link adaptor (5) is used for this. The link adaptor (5) is connected to the air transmission line (4) directly or connected from the outside or connected to the test device. In one embodiment of the invention, the air transmission line (4) is connected to a vehicle by means of a link adaptor (5). In one embodiment of the invention, the link adaptor (5) is in the form of a panel, it surrounds the air transmission line (4) totally, and it fits to the car in a manner such that there is no space between it and the glass or the door.

The air pressure within the vehicle, outside the vehicle, within the air transmission line (4) is measured during the test by means of the pressure sensors (6). There are pressure sensors (6) in different locations of the measurement system (1) of the present invention and the vehicle. The air pressures within the vehicle, outside the vehicle and within the measurement system (1) can be measured during the test by means of the pressure sensors (6).

In one embodiment of the invention, at least one of the pressure sensors (6) measures the pressure difference. Said pressure sensor (6) measures the pressure difference at the interior and exterior sections of the vehicle door.

In one embodiment of the invention, the measurement values performed by the pressure sensors (6) are transferred to the control unit (12) through the sensor line (7). The sensor line (7) is preferably cabled and the pressure values are transferred to the control unit (12) by means of the cabled sensor line (7). In one embodiment of the invention, the pressure values are transferred wirelessly to the control unit (12) by the pressure sensors (6).

The pressure that the vehicle is subjected to during driving is simulated by giving pressurized and high-volume air into the vehicle within the measurement system (1) of the present invention. When the vehicle is travelling on the road, a force is created from the inward to outward between the interior and exterior volume of the cabin. The doors of the vehicle are opened outwardly due to said force in such a manner that cannot be seen visually. If said door opening increases above the threshold values, there will be noise problem similar to the wind-induced noise and the whistle sound. Said noise problem called wind-induced noise causes customer complaint. When the speed of the vehicle increases, the doors move outwardly more than before. The door opening measurements of the door that is opened outwardly by the pressure applied into the interior volume of the vehicle is performed continuously by means of the measurement system (1) of the present invention.

In one embodiment of the invention, the points on the door or points near the surface of the door wherein the measurements will be made are determined as the measurement point (10). The measurement point (10) is only used for determining the location wherein the measurements will be made. In a different embodiment of the invention, markers may be used as the measurement point (10). The measurement point (10) that has structure with markers can be fixed to the measurement location, the camera (9) and/or laser distance meter (8) can easily perceive the movement at the measurement point and the amount of the door opening by means of the structure of the measurement point (10) with markers.

The measurement of the door opening amount is made by means of the distance meter (8). A laser measurement device is used as the distance meter (8). The distance meter (8) provides the measurement of the door opening amount by means of the laser beams laser and transfers the measurement values to the control unit (12) with cable or wirelessly. The laser distance meter (8) is preferably located within or outside the vehicle. In one embodiment of the invention, the distance meter (8) is preferably located facing the measurement points (10) and sends laser beams to the measurement points (10), receives back the laser beams that are reflected and measure the door opening amount. If the door opening amount increases, the location of the measurement point (10) also changes and the distance meter (8) measures said change, transfers the measurement values to the control unit (12).

The wind-induced noise is measured by the camera (9). An acoustic camera is used as the camera (9). The acoustic camera (9) continuously perceives the measurement points (10) on the door and the vehicle. Sound waves are perceived by means of the acoustic camera (9) and at the door; the noise source is determined by measuring the sound waves occurred within the vehicle. The acoustic camera (9) can detect the source and location of the sound directly. Only the sound waves within the preferred frequencies can be detected by the acoustic camera (9), thus the sound leakages within the required frequencies are detected. Also, sound values within different frequencies can be measured at the same time by means of the acoustic camera (9).

The laser distance meter (8) and the acoustic camera (9) can be used at the same time and also separately in the measurement system (1) of the present invention.

The door opening amount is measured by means of the laser distance meter (8), at the same time sound leakages, noise sources are measured by means of the acoustic camera (9) via sound waves. The acoustic camera (9) transfers the measurement values to the control unit (12) instantly.

In one embodiment of the invention, the distance meter (8) and the camera (9) are connected to the control unit (12) via a cable. The electrical cables of the distance meter (8) and the camera (9) are transferred via the data line (11) to the control unit (12). The data line (11) and the sensor line (7) passes through a hole preferably located on the link adaptor (5).

The control unit (12) controls the operation of the compressor (2) and the pump (3). The control unit (12) receives the measurement values of the pressure sensors (6), the laser distance meter (8) and the acoustic camera (9) instantly and compares these with the set values. The control unit (12) controls the operation of the compressor (2) and the pump (3) in order to perform the speed simulation by providing the preferred pressure set values, operates the compressor (2) and the pump (3) according to the set values, the pressure and volume value received from the pressure sensor (6).

The control unit (12) preferably includes at least one display, memory and processor. The test process can be initiated, terminated and monitored through the display located on the control unit (12). The operator can initiate the test process after entering the speed value of the vehicle that will be simulated, pressure value through the control unit (12) display.

The operation of the air leakage and wind-induced noise measurement system (1) of the present invention is as follows: The operator enters the test values or the vehicle information to be tested into the control unit (12). The preferred door displacement value or the pressure value can be entered directly in the control unit (12). The control unit (12) provides a pressurized and high volume test air by operating the compressor (2) and the pump (3) according to the test values and the vehicle. The air to be used for the test is transferred to the vehicle from within the air transmission line (4). The interior pressure and the exterior pressure outside the door of the vehicle are measured by means of the pressure sensors (6) located within the vehicle. The control unit (12) controls the compressor (2) and the pump (3) in order to obtain the set test pressure according to the measurement values received from the pressure sensors (6). The control unit (12) at the same time, during the air leakage and wind-induced noise test, processes the values received from the measurement points (10) by means of the laser distance meter (8) and the camera (9). The control unit (12) by comparing the measurement values of the door opened outwardly by the pressure applied in the interior volume of the vehicle with the set door opening threshold value, determines whether the instant values are above or below the set values. Said set value shows the pressure value that occurs during the maximum speed of the vehicle. The measured pressure value is the force applied by the air pumped into the interior volume of the cabin, to the unit area of the interior surfaces of the body that acts as a barrier between the interior and exterior volume of the vehicle. Together with the pressurized air pumped into the interior volume of the vehicle, an outward force occurs from the interior volume of the cabin. This force occurred on the door pushes the door outwardly. Since the force applied on the door increases when the speed of the vehicle increases so that the compressor (2) is also fastened in order to make the speed increase simulation and a pressurized and high volume air is pumped into the vehicle. The air pumped into the cabin penetrates to the exterior volume from the air leakage points that are found within the interior surface. The pressure created by the compressor (2) within the cabin volume decreases due to this air leakage from the interior to the exterior volume of the cabin. At that time by measuring the volume of the air that is pumped by the compressor (2) in order to bring the pressure to its first value by the compressor (2), said value is saved by the control unit (12) as the air leakage volume value. When said pressure value is obtained, the door opening (door displacement) amount, the noise-induced noise amount are measured. The control unit (12) receives the door opening amount information by means of the laser distance meter (8) and receives the sound leakage values by means of the acoustic camera (9). The interior noise map of the cabin can be created by means of the acoustic camera (9), the regions that cause the noise, the noise levels within the cabin is shown on the map. Said data can be shown on the control unit (12) display. If the measured pressure value is lower than the pressure value that can occur during the maximum speed of the vehicle, the vehicle is considered as problematic.

It is possible to change the input parameter values of the measurement system (1) through the control unit (12). The measurement system (1) can be operated by means of the door displacement amount information instead of the pressure value. In said case, until the set door displacement amount is measured, pressurized, high volume air is given into the cabin and when the set value is obtained, the pressure value and the speed value that simulates the pressure value is determined. Also, the required control and corrections of the vehicle whose production is completed can be made by measuring the wind-induced noise values with the acoustic camera (9) measurement results.

The air leakage control is made; the minor air leakages that may occur at high speeds, the effects of the air leakages and the wind-induced noise effect are evaluated by means of the measurement system (1) of the invention. After measuring the door replacement amounts that occur at high speeds during the vehicle drive, they can be determined by means of the measurement system (1).

## Claims

1. A measurement system (1) that provides to perform air leakage tests of motor vehicles, at the same time to measure a door displacement amount that causes wind-induced noise, the wind-induced noise and the air leakage, the measurement system comprising:
- at least one compressor (2) that provides the required air for the air leakage test,
- at least one pump (3) that pumps the air provided by the compressor (2) into the vehicle for test, that sucks the air in the vehicle in the suction direction by operating backwardly,
- at least one air transmission line (4) that passes through the air flow between the vehicle and the pump (3), provides the air directed by the pump (3) to be transferred to the vehicle, preferably has a tubular form and is portable ,
- at least one link adaptor (5) that is located on one end of the air transmission line (4) or attached to its one end, provides the connection of the air transmission line (4) to the vehicle imperviously,
- at least one pressure sensor (6) that is located within the vehicle and/or within the air transmission line, that measures the pressure value within the vehicle and outside the vehicle, **characterized in that** it further comprises:
- a distance meter (8) that measures via laser beams the door displacement amount of the door that is opened outwardly by means of the air pressure applied into the interior volume of the vehicle,
- an acoustic camera (9) that measures the noise frequency that occurs during the door displacement,
- a control unit (12) adapted to control the test process and that provides to create a preferred air pressure and volume value within the vehicle during the test by controlling the operation of the compressor (2) and the pump (3) according to the measurement value that is received from the pressure sensor (6), controls the door opening amount that is opened outwardly according to the measurement value that is received from the distance meter (8) and the camera (9), if the door opening amount is above a preferred set value, saves the instant pressure value, the door opening amount, and determines the simulated speed value of the vehicle according to the pressure.

2. A measurement system (1) according to claim 1, **characterized in that** the control unit (12) is adapted to simulate the pressure that the vehicle is subjected to due to the vehicle speed during drive by giving a pressurized and high volume air into the vehicle and to create a force from inside to the outside between the interior and exterior volume of the cabin and, the laser distance meter (8) is adapted to be located such that is faces measurement points (10), to send laser beams to the measurement points (10), to make measurement by receiving back the reflected laser beams, to measure the door displacement amount when the door is opened outwardly.

3. A measurement system (1) according to claim 1, **characterized in that** the acoustic camera (9) is adapted to provide the measurement of the wind-induced noise by measuring the frequency of the sound waves and to determine directly the source and location of the sound within the cabin.

4. A measurement system (1) according to claim 1, **characterized in that** the acoustic camera (9) measures sound values at different frequencies at the same time, provides to determine the sound leakages at the required frequency by perceiving only the sound waves at the determined frequency when preferred.

5. A measurement system (1) according to claim 4, **characterized in that** the acoustic camera (9) provides to perform an interior noise map of the cabin by measuring the sound waves at different frequencies and preferred frequencies and the source point of the waves.

6. A measurement system (1) according to claim 1, **characterized in that** the control unit (12) is adapted to receive the measurement values of the pressure sensors (6), the laser distance meter (8) and the acoustic camera (9) instantly and compares these values with the set values,
to control the operation of the compressor (2) and the pump (3) in order to perform the speed simulation by providing the preferred pressure set values, to operate the compressor and the pump (3) according to the set value, the pressure and volume value that it receives from the pressure sensor (6).

7. A measurement system (1) according to claim 1, **characterized in that** the control unit (12) includes at least one display, memory and processor, wherein the test process is started, terminated and monitored through the display, wherein an operator can start the test process by entering the vehicle speed value, pressure value, door displacement value through the display located on the control unit.

8. A measurement system (1) according to claim 1, **characterized in that** when the air pumped into the cabin penetrates to the exterior volume from the air leakage points located on the interior surface of the body, due to the air that flows from the interior to the exterior volume of the cabin, the pressure created by the compressor (2) within the cabin volume decreases and when the pressure value decreases;
the control unit (12) is adapted to measure the volume of the air pumped by means of the compressor (2) in order to bring the decreased pressure to its initial value and to save said value as the air leakage volume value.

9. A measurement system (1) according to claim 1, **characterized in that** the control unit (12) is adapted to measure the door displacement amount, the sound noise amount by receiving and saving the door opening amount information from the laser distance meter (8) and the sound leakage values from the acoustic camera (9) when the pressure value created by the compressor (2) within the cabin volume decreases.

## Patentansprüche

1. Maßsystem (1), das es vorsieht, Luftaustrittstests der Kraftfahrzeugen durchzuführen, gleichzeitig einen Türverschiebungsbetrag zu messen, der windinduzierte Geräusche, die windinduzierten Geräusche und die Luftaustritt verursacht, das Maßsystem umfasst:
- mindestens einen Kompressor (2), der die für den Luftaustrittstest erforderliche Luft liefert,
- mindestens eine Pumpe (3), die die vom Kompressor (2) gelieferte Luft in das Fahrzeug pumpt, zumindest aber die Luft im Fahrzeug in Ansaugrichtung ansaugt, indem sie rückwärts arbeitet,
- mindestens eine Luftübertragungsleitung (4), die den Luftstrom zwischen dem Fahrzeug und der Pumpe (3) verläuft, die von der Pumpe (3) gelenkte Luft zum Fahrzeug leitet, vorzugsweise eine röhrenartige Form aufweist und tragbar ist,
- mindestens ein Verbindungsadapter (5), der an einem Ende der Luftübertragungsleitung (4) angeordnet oder an deren einem Ende angebracht ist, sieht die Verbindung der Luftübertragungsleitung (4) mit dem Fahrzeug undurchdringlich vor,
- mindestens einen Drucksensor (6), der innerhalb des Fahrzeugs und/oder innerhalb der Luftleitung angeordnet ist, der den Druckwert innerhalb des Fahrzeugs und außerhalb des Fahrzeugs misst, **dadurch gekennzeichnet, dass** er ferner umfasst:
- einen Abstandsmesser (8), der über Laserstrahlen den Türverschiebungsbetrag der nach außen geöffneten Tür mittels des in den Innenraum des Fahrzeugs eingeleiteten Luftdrucks misst,
- eine akustische Kamera (9), die die Geräuschfrequenz misst, die während der Türverschiebung auftritt,
- eine Steuereinheit (12), die daran angepasst ist, den Testprozess zu steuern und vorsieht, während des Tests einen bevorzugten Luftdruck- und Volumenwert innerhalb des Fahrzeugs zu erzeugen, indem der Betrieb des Kompressors (2) und der Pumpe (3) gemäß dem vom Drucksensor (6) empfangenen Messwert gesteuert wird, steuert den Türöffnungsbetrag, der nach außen geöffnet wird, entsprechend dem Messwert, der vom Abstandsmesser (8) und der Kamera (9) empfangen wird, wenn der Türöffnungsbetrag über einem bevorzugten Sollwert liegt, speichert den aktuellen Druckwert, die Türöffnungsbetrag und bestimmt den simulierten Geschwindigkeitswert des Fahrzeugs in Abhängigkeit vom Druck.

2. Maßsystem (1) nach Anspruch 1, **dadurch gekennzeichnet, dass** die Steuereinheit (12) daran angepasst ist, den Druck, dem das Fahrzeug aufgrund der Fahrzeuggeschwindigkeit während der Fahrt ausgesetzt ist, zu simulieren, indem sie Druckluft mit hohem Volumen in das Fahrzeug einleitet und eine Kraft von innen nach außen zwischen dem Innen- und Außenvolumen der Kabine erzeugt, und,
dass der Laserabstandsmesser (8) so angepasst ist, um angeordnet zu werden, dass der Messpunkten (10) gegenüberliegt, um Laserstrahlen zu den Messpunkten (10) zu senden, um durch Empfangen der reflektierten Laserstrahlen eine Messung durchzuführen, um den Türverschiebungsbetrag zu messen, wenn die Tür nach außen geöffnet wird.

3. Maßsystem (1) nach Anspruch 1, **dadurch gekennzeichnet, dass** die akustische Kamera (9) daran angepasst ist, die Messung des windinduzierten Lärms durch Messung der Frequenz der Schallwellen zu ermöglichen und direkt die Quelle und den Ort des Schalls innerhalb der Kabine zu bestimmen.

4. Maßsystem (1) nach Anspruch 1, **dadurch gekennzeichnet, dass** die akustische Kamera (9) Schallwerte bei verschiedenen Frequenzen gleichzeitig misst, sieht es vor, die Schallaustritte bei der gewünschten Frequenz zu bestimmen, indem sie nur die Schallwellen bei der bestimmten Frequenz wahrnimmt, wenn bevorzugt.

5. Maßsystem (1) nach Anspruch 4, **dadurch gekennzeichnet, dass** die akustische Kamera (9) eine Innengeräuschkarte der Kabine erstellt, indem sie die Schallwellen bei verschiedenen Frequenzen und bevorzugten Frequenzen sowie den Quellpunkt der Wellen misst.

6. Maßsystem (1) nach Anspruch 1, **dadurch gekennzeichnet, dass** die Steuereinheit (12) angepasst ist, die Messwerte der Drucksensoren (6), des Laserabstandsmesser (8) und der akustischen Kamera (9) unmittelbar zu empfangen und mit den Sollwerten vergleicht, den Betrieb des Kompressors (2) und der Pumpe (3) zur Durchführung der Drehzahlsimulation durch Vorgabe der bevorzugten Drucksollwerte zu steuern, den Kompressor und die Pumpe (3) entsprechend dem Sollwert, dem Druck- und dem Volumenwert, den sie von dem Drucksensor (6) erhält, zu betreiben.

7. Maßsystem (1) nach Anspruch 1, **dadurch gekennzeichnet, dass** die Steuereinheit (12) mindestens eine Anzeige, einen Speicher und einen Prozessor umfasst, wobei der Prüfvorgang über die Anzeige gestartet, beendet und überwacht wird, wobei ein Bediener den Prüfvorgang durch Eingabe des Fahrzeuggeschwindigkeitswertes, des Druckwertes, des Türverschiebungswertes über die in einer Steuereinheit befindliche Anzeige starten kann.

8. Maßsystem (1) nach Anspruch 1, **dadurch gekennzeichnet, dass** wenn die in die Kabine gepumpte Luft von den Luftaustrittsstellen, die auf der Innenfläche des Körpers angeordnet ist, in das Außenvolumen eindringt, aufgrund der Luft, die aus dem Innenraum in das Außenvolumen der Kabine strömt, der durch den Kompressor (2) innerhalb des Kabinenvolumens erzeugte Druck vermindert und wenn der Druckwert vermindert; die Steuereinheit (12) daran angepasst ist, das Volumen der mittels des Kompressors (2) gepumpten Luft zu messen, um den verminderten Druck auf seinen Anfangswert zu bringen, und genannten Wert als den Wert des Luftaustrittvolumens speichert.

9. Maßsystem (1) nach Anspruch 1, **dadurch gekennzeichnet, dass** die Steuereinheit (12) daran angepasst ist, den Türverschiebungsbetrag, den Schall Geräuschmenge durch Empfangen und Speichern der Türöffnungsmengeninformation vom Laserabstandsmesser (8) und die Schallaustrittwerte von der akustischen Kamera (9) zu messen, wenn der vom Kompressor (2) im Kabinenvolumen erzeugte Druckwert vermindert.

## Revendications

1. Système de mesure (1) qui permet d'effectuer des tests de fuite d'air de véhicules à moteur, en même temps que de mesurer une quantité de déplacement de porte qui provoque un bruit induit par le vent, le bruit induit par le vent et la fuite d'air, le système de mesure comprenant :
- au moins un compresseur (2) qui fournit l'air nécessaire au test d'étanchéité à l'air,
- au moins une pompe (3) qui pompe l'air fourni par le compresseur (2) dans le véhicule pour le test, qui aspire l'air dans le véhicule dans le sens de l'aspiration en fonctionnant vers l'arrière,
- au moins une ligne de transmission d'air (4) qui traverse le flux d'air entre le véhicule et la pompe (3), fournit l'air dirigé par la pompe (3) pour être transféré dans le véhicule, a de préférence une forme tubulaire et est portable,
- au moins un adaptateur de liaison (5) qui est situé sur une extrémité de la ligne de transmission d'air (4) ou fixé à sa première extrémité, assure la connexion de la ligne de transmission d'air (4) au véhicule de manière étanche,
- au moins un capteur de pression (6) qui est situé à l'intérieur du véhicule et/ou à l'intérieur de la ligne de transmission d'air, qui mesure la valeur de la pression à l'intérieur du véhicule et à l'extérieur du véhicule, **caractérisé en ce qu'**il comprend en outre :
- un mesureur de distance (8) qui mesure, au moyen de faisceaux laser, la quantité de déplacement de la porte qui est ouverte vers l'extérieur au moyen de la pression d'air appliquée dans le volume intérieur du véhicule,
- une caméra acoustique (9) qui mesure la fréquence du bruit qui se produit pendant le déplacement de la porte,
- une unité de commande (12) adaptée pour commander le processus de test et qui permet de créer une valeur préférée de pression et de volume d'air à l'intérieur du véhicule pendant le test en commandant le fonctionnement du compresseur (2) et de la pompe (3) selon la valeur de mesure qui est reçue du capteur de pression (6), contrôle la quantité d'ouverture de la porte qui est ouverte vers l'extérieur en fonction de la valeur de mesure qui est reçue du mesureur de distance (8) et de la caméra (9), si la quantité d'ouverture de la porte est supérieure à une valeur de consigne préférée, enregistre la valeur de pression instantanée, la quantité d'ouverture de la porte, et détermine la valeur de vitesse simulée du véhicule en fonction de la pression.

2. Système de mesure (1) selon la revendication 1, **caractérisé en ce que** l'unité de commande (12) est adaptée pour simuler la pression à laquelle le véhicule est soumis en raison de la vitesse du véhicule pendant la conduite en fournissant un volume d'air pressurisé et élevé dans le véhicule et pour créer une force de l'intérieur vers l'extérieur entre le volume intérieur et extérieur de la cabine et,
le mesureur de distance à laser (8) est adapté pour être situé de telle sorte qu'il se trouve face à des points de mesure (10), pour envoyer des faisceaux laser vers les points de mesure (10), pour effectuer une mesure en recevant les faisceaux laser réfléchis pour mesurer la quantité de déplacement de la porte lorsque la porte est ouverte vers l'extérieur.

3. Système de mesure (1) selon la revendication 1, **caractérisé en ce que** la caméra acoustique (9) est adaptée pour fournir la mesure du bruit induit par le vent en mesurant la fréquence des ondes sonores et pour déterminer directement la source et l'emplacement du son dans la cabine.

4. Système de mesure (1) selon la revendication 1, **caractérisé en ce que** la caméra acoustique (9) mesure les valeurs sonores à différentes fréquences en même temps, permet de déterminer les fuites sonores à la fréquence requise en ne percevant que les ondes sonores à la fréquence déterminée lorsque cela est préférable.

5. Système de mesure (1) selon la revendication 4, **caractérisé en ce que** la caméra acoustique (9) permet de réaliser une carte du bruit intérieur de la cabine en mesurant les ondes sonores à différentes fréquences et les fréquences préférées et le point source des ondes.

6. Système de mesure (1) selon la revendication 1, **caractérisé en ce que** l'unité de commande (12) est adaptée pour recevoir les valeurs de mesure des capteurs de pression (6), du mesureur de distance à laser (8) et de la caméra acoustique (9) instantanément et compare ces valeurs avec les valeurs de consigne, pour commander le fonctionnement du compresseur (2) et de la pompe (3) afin d'effectuer la simulation de vitesse en fournissant les valeurs de consigne de pression préférées, pour faire fonctionner le compresseur et la pompe (3) selon la valeur de consigne, la valeur de pression et de volume qu'elle reçoit du capteur de pression (6).

7. Système de mesure (1) selon la revendication 1, **caractérisé en ce que** l'unité de commande (12) comprend au moins un affichage, une mémoire et un processeur, dans laquelle le processus de test est lancé, terminé et surveillé par l'intermédiaire de l'affichage, dans laquelle un opérateur peut lancer le processus de test en entrant la valeur de vitesse du véhicule, la valeur de pression, la valeur de déplacement de la porte par l'intermédiaire de l'affichage situé sur l'unité de commande.

8. Système de mesure (1) selon la revendication 1, **caractérisé en ce que** lorsque l'air pompé dans la cabine pénètre dans le volume extérieur à partir des points de fuite d'air situés sur la surface intérieure du corps, en raison des flux d'air de l'intérieur vers le volume extérieur de la cabine, la pression créée par le compresseur (2) à l'intérieur du volume de la cabine diminue et lorsque la valeur de la pression diminue; l'unité de commande (12) est adaptée pour mesurer le volume de l'air pompé au moyen du compresseur (2) afin de ramener la pression diminuée à sa valeur initiale et pour enregistrer ladite valeur en tant que valeur du volume de fuite d'air.

9. Système de mesure (1) selon la revendication 1, **caractérisé en ce que** l'unité de commande (12) est adaptée pour mesurer la quantité de déplacement de la porte, la quantité de bruit sonore en recevant et en sauvegardant les informations de quantité d'ouverture de la porte provenant du mesureur de distance à laser (8) et les valeurs de fuite sonore provenant de la caméra acoustique (9) lorsque la valeur de pression créée par le compresseur (2) à l'intérieur du volume de la cabine diminue.
